# EUROPEAN PATENT SPECIFICATION

(11) **EP 3 997 991 B1**
(45) Date of publication and mention of the grant of the patent: **24.06.2026**
(21) Application number: 19946735.8
(22) Date of filing: 25.09.2019
(51) Int. Cl.: A24F 40/53, A24F 40/65

(54) **BATTERY UNIT, INFORMATION PROCESSING METHOD, AND PROGRAM**
BATTERIEEINHEIT, INFORMATIONSVERARBEITUNGSVERFAHREN UND PROGRAMM
UNITÉ DE BATTERIE, PROCÉDÉ DE TRAITEMENT D'INFORMATIONS ET PROGRAMME

(43) Date of publication of application: 18.05.2022
(73) Proprietor: Japan Tobacco Inc., Tokyo 105-6927 (JP)
(72) Inventor: ONO, Yasuhiro, Tokyo 130-8603 (JP)
(74) Representative: Hoffmann Eitle
(86) International application number: PCT/JP2019/037488
(87) International publication number: WO 2021/059377

(56) References cited:
- JP-A- 2006 010 237
- JP-A- 2006 010 237
- JP-A- 2014 501 106
- JP-A- 2014 501 106
- JP-A- 2017 514 463
- JP-A- 2017 514 463
- JP-A- 2018 509 139
- JP-A- 2018 509 139
- JP-A- 2018 514 191
- JP-A- 2018 514 191

## Description

### Technical Field

The present invention relates to a battery unit, an information processing method, and a program.

### Background Art

Techniques related to measures against abnormalities in electronic cigarettes have been developed in recent years. In this regard, Patent Literature 1 discloses a technique for forcibly shutting down a power supply when an abnormality has occurred in an electronic cigarette.

Patent Literature 2 to 6 relate to further known techniques.

### Citation List

### Patent Literature

Patent Literature 1: US2015/0173124A
Patent Literature 2: JP 2018 509139 A
Patent Literature 3: JP 2017 514463 A
Patent Literature 4: JP 2006 01 0237 A
Patent Literature 5: JP 2014 501106 A
Patent Literature 6: JP 2018 514191 A

### Summary of Invention

### Technical Problem

In a conventional electronic cigarette as described in Patent Literature 1, a method of notifying a user of occurrence of an abnormality is limited due to required reduction in the size of a main body thereof. A conventional electronic cigarette includes a small LED (Light Emitting Diode) instead of a display device such as a liquid crystal display for notifying a user of occurrence of an abnormality, and notifies the user of the content of the abnormality by a lighting pattern of the LED.

However, the user needs to remember all of a plurality of lighting patterns of the LED to identify the content of the abnormality. If the user fails to remember all of the plurality of lighting patterns of the LED, the user needs to check the lighting pattern each time an abnormality occurs. In addition, electronic cigarettes tend to have an increasing number of functions, resulting in an increase in the number of lighting patterns of LEDs. As described above, it is difficult and time-consuming for the user to identify the content of the abnormality of the electronic cigarette on the basis of the lighting pattern of the LED.

Accordingly, some aspects of the present invention have been made in view of the foregoing situation, and an object thereof is to provide a technique that can accurately identifying the content of an abnormality of an aerosol generation device that generates an aerosol without requiring labor.

### Solution to Problem

A battery unit according to an aspect of the present invention is a battery unit in an aerosol generation device for generating an aerosol, including an abnormality detection unit that detects an abnormality of the aerosol generation device; a determination unit that determines, based on content of the abnormality, whether to stop at least one function of the aerosol generation device corresponding to the content of the abnormality; a notification unit that notifies a user terminal of output information for allowing the user terminal to output the content of the abnormality, based on the content of the abnormality, when the at least one function is to be stopped; and a timing control unit that controls a timing of notifying the user terminal of the output information at the user terminal, based on the content of the abnormality.

An information processing method according to an aspect of the present invention is an information processing method executed by an aerosol generation device for generating an aerosol, including a step of detecting an abnormality of the aerosol generation device; a step of determining, based on content of the abnormality, whether to stop at least one function of the aerosol generation device corresponding to the content of the abnormality; a step of notifying a user terminal of output information for allowing the user terminal to output the content of the abnormality, based on the content of the abnormality, when the at least one function is to be stopped; and a step of controlling a timing of notifying the user terminal of the output information at the user terminal, based on the content of the abnormality.

A program according to an aspect of the present invention causes a computer to function as an abnormality detection unit that detects an abnormality of an aerosol generation device that generates an aerosol; a determination unit that determines, based on content of the abnormality, whether to stop at least one function of the aerosol generation device corresponding to the content of the abnormality; a notification unit that notifies a user terminal of output information for allowing the user terminal to output the content of the abnormality, based on the content of the abnormality, when the at least one function is to be stopped; and a timing control unit that controls a timing of notifying the user terminal of the output information at the user terminal, based on the content of the abnormality.

According to these aspects, it is determined, based on content of an abnormality of the aerosol generation device, whether to stop at least one function of the aerosol generation device corresponding to the content of the abnormality. In the aspects described above, when the at least one function is to be stopped, output information for allowing the user terminal to output the content of the abnormality is notified to the user terminal, based on the content of the abnormality. In the aspects described above, a timing of notifying the user terminal of the output information at the user terminal is controlled based on the content of the abnormality. Therefore, it is possible to accurately identify the content of the abnormality of the aerosol generation device without requiring labor.

In the present invention, the terms "unit" or "part" and "device" do not simply refer to physical means and may include functions of the "unit" or "part" and "device", which are implemented by software. In addition, the functions of one "unit" or "part" or one "device" may be implemented by two or more physical means or devices, or the functions of two or more "units" or "parts" or two or more "devices" may be implemented by one physical means or device.

### Advantageous Effects of Invention

According to the present invention, it is possible to accurately identify the content of an abnormality of an aerosol generation device without requiring labor.

### Brief Description of Drawings

[FIG. 1] FIG. 1 is a schematic configuration diagram of an abnormality notification processing system for providing notification of the content of an abnormality of a flavor inhaler according to an embodiment of the present invention.
[FIG. 2A] FIG. 2A is a block diagram of a schematic configuration of the flavor inhaler according to the embodiment of the present invention.
[FIG. 2B] FIG. 2B is a diagram illustrating an example schematic appearance of the flavor inhaler according to the embodiment of the present invention.
[FIG. 3] FIG. 3 is a block diagram illustrating a schematic configuration of the flavor inhaler according to the embodiment of the present invention.
[FIG. 4] FIG. 4 is a block diagram illustrating another schematic configuration of the flavor inhaler according to the embodiment of the present invention.
[FIG. 5] FIG. 5 is a diagram illustrating another example schematic appearance of the flavor inhaler according to the embodiment of the present invention.
[FIG. 6] FIG. 6 illustrates another example schematic appearance of the flavor inhaler according to the embodiment of the present invention with an aerosol-generating substrate held.
[FIG. 7] FIG. 7 is a block diagram of a schematic configuration of a user terminal according to the embodiment of the present invention.
[FIG. 8] FIG. 8 is a schematic configuration diagram illustrating an example functional configuration of a control unit according to the embodiment of the present invention.
[FIG. 9] FIG. 9 is a diagram illustrating an example of notification timing information according to the embodiment of the present invention.
[FIG. 10] FIG. 10 is a flowchart illustrating an example of an abnormality notification process according to a first embodiment of the present invention.
[FIG. 11] FIG. 11 is a diagram illustrating an example of a screen output from an output unit of the user terminal according to the embodiment of the present invention.
[FIG. 12] FIG. 12 is a diagram illustrating another example of the notification timing information according to the embodiment of the present invention.
[FIG. 13] FIG. 13 is a flowchart illustrating an example of an abnormality notification process according to a second embodiment of the present invention.
[FIG. 14] FIG. 14 is a diagram illustrating an example hardware configuration of a computer according to an embodiment of the present invention.

### Description of Embodiments

Embodiments of the present invention will be described hereinafter with reference to the accompanying drawings. The following embodiments are illustrative for describing the present invention and are not intended to limit the present invention to only the embodiments thereof. Further, the present invention may be modified in various ways without departing from the gist thereof. In addition, in the drawings, the same structural elements are denoted by the same reference signs as much as possible, and redundant description will be omitted.

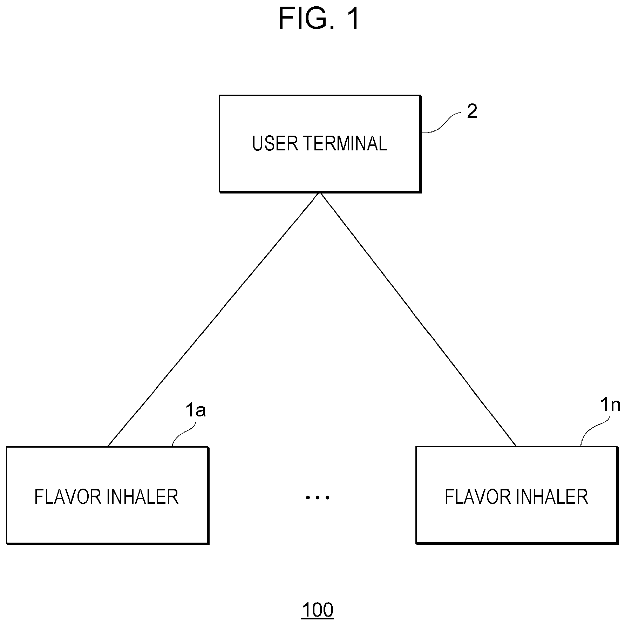

FIG. 1 is a schematic configuration diagram (system configuration diagram) of an abnormality notification processing system for providing notification of the content of an abnormality of a flavor inhaler according to this embodiment of the present invention. As illustrated in FIG. 1, an abnormality notification processing system 100 is configured to include, for illustrative purposes, n flavor inhalers 1 (n is any integer value greater than or equal to 1), and a user terminal 2 configured be capable of communicating with the n flavor inhalers 1.

The "flavor inhaler 1" is a tool used to inhale flavor and is intended to be, for example, but not limited to, an electronic cigarette, a heat-not-burn tobacco product, or a conventional tobacco product. Further, the flavor inhaler 1 is an aerosol generation device that generates an aerosol and that is used to inhale the generated aerosol. The aerosol generation device is intended to be, for example, an electronic cigarette, a heat-not-burn tobacco product, or a nebulizer for medical use. More specifically, the aerosol generation device is, for example, a device that atomizes a liquid (aerosol source) using electric power to generate an aerosol. The aerosol is obtained by atomizing an aerosol source and is a suspension of fine particles in a gas. The aerosol generated by the aerosol generation device may include a flavor. Examples of the aerosol generation device include heat-not-burn tobacco products (such as T-vapor and Infused) and electronic cigarettes (E-vapor). The aerosol generation device further includes a type that directly heats tobacco (direct heating), a type that indirectly heats tobacco (indirect heating), and a type that heats a liquid. Alternatively, the aerosol generation device may generate SAWs (Surface Acoustic Waves) using a piezoelectric element substrate having a pair of comb electrodes to atomize a liquid. In the figure, a flavor inhaler 1a and a flavor inhaler 1n are illustrated as n flavor inhalers. In the following description, these n flavor inhalers are simply referred to as "flavor inhalers 1" with some reference signs omitted, when they are described without being distinguished from each other.

The user terminal 2 is implemented by, for example, a smartphone, a game console, or a personal computer. One user terminal 2 is illustrated in the figure, but it is not limited thereto. The abnormality notification processing system 100 may include a plurality of user terminals 2.

The flavor inhaler 1 and the user terminal 2 are associated with each other and are capable of executing short-range wireless communication such as Bluetooth [registered trademark] or BLE (Bluetooth Low Energy) communication to transmit and receive data to and from each other. Data transmission and reception between the flavor inhaler 1 and the user terminal 2 is not limited to BLE communication and may be executed by any communication such as Wi-Fi [registered trademark], LPWAN (Low Power Wide Area Network), or NFC (Near Field Communication). In addition, data transmission and reception between the flavor inhaler 1 and the user terminal 2 is not limited to wireless communication and may be wired communication such as USB (Universal Serial Bus), Mini USB, Micro USB, or Lightning.

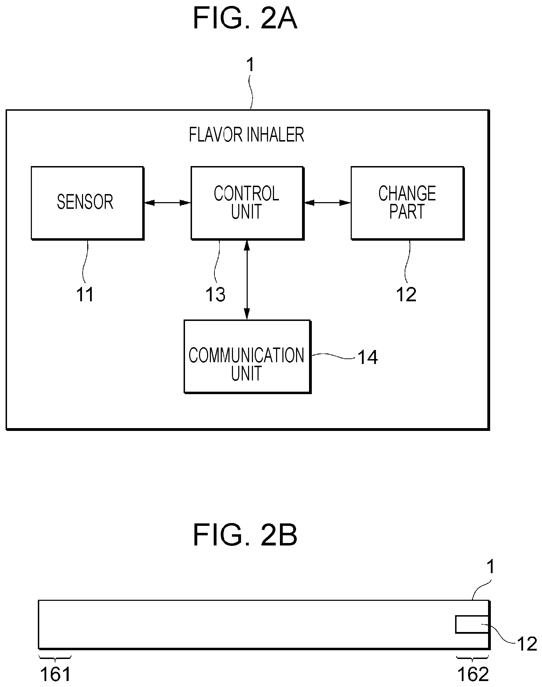

FIG. 2A is a block diagram of a schematic configuration of the flavor inhaler according to the embodiment of the present invention. It should be noted that FIG. 2A schematically and conceptually illustrates components included in the flavor inhaler 1 and does not illustrate the precise arrangement, shape, size, positional relationship, and the like of the components and the flavor inhaler 1. It should also be noted that the flavor inhaler 1 may include a component not illustrated in FIG. 2A, such as a tobacco capsule or a liquid cartridge.

A sensor 11 represents a sensor that detects information regarding, for example, inhalation of a user. The sensor 11 may be any type of sensor for detecting an inhalation action of the user, such as a flow sensor, a flow velocity sensor, or a pressure sensor. The sensor 11 may be a button to be pressed by the user to perform an inhalation action. For example, the sensor 11 may be an inhalation sensor and may detect an inhalation of the user through the flavor inhaler 1. The sensor 11 may be an air flow sensor and may detect an air flow generated by inhalation of the user. The sensor 11 may be a GPS sensor that measures the position of the flavor inhaler 1, or may be a gyro sensor or the like for detecting the angle, posture, and the like of the flavor inhaler 1.

A change part 12 is a block that generates a predetermined change that is externally observable. The change part 12 may be an LED (Light Emitting Diode) that emits light of a predetermined color, for example, a blue LED, and the predetermined change may be light emission of a predetermined color, for example, blue. The predetermined color is not limited to blue and may be any color. The predetermined change may be a change in the color of light emission or a change in the intensity of light emission according to the strength of inhalation, which is sensed by the sensor 11. The change part 12 is not limited to an LED and may be a light source having another configuration that emits light of a predetermined color.

FIG. 2B is a diagram illustrating an example schematic appearance of the flavor inhaler according to the embodiment of the present invention. The arrangement of the change part 12 will be described with reference to FIG. 2B. As presented in FIG. 2B, the flavor inhaler 1 may be, but not limited to, of a stick shape including two ends 161 and 162. The user holds the one end 161 in the mouth to inhale. The user may hold the one end 161 in the mouth to inhale through a mouthpiece for a cigarette or the like attachable to the one end 161. In a case where the flavor inhaler 1 has the shape as presented in FIG. 2B, the change part 12 is preferably disposed in the other end 162 of the two ends. The change part 12 is at least a portion of an outer surface of the flavor inhaler 1 and may have any shape such as a substantially rectangular shape as presented in FIG. 2B or an annular shape (not illustrated) along the outer circumference of the flavor inhaler 1.

Referring back to FIG. 2A, a control unit 13 is a block that causes the change part 12 to generate a predetermined change on the basis of at least a signal from the sensor 11. The control unit 13 may cause the change part 12 to produce light emission of a predetermined color when, for example, the magnitude of the signal from the sensor 11 or the strength of inhalation determined based on the signal is greater than or equal to a predetermined threshold value. Further, the control unit 13 may change the color or intensity of light emission of the change part 12 in accordance with, for example, the magnitude of the signal from the sensor 11 or the strength of inhalation determined based on the signal. For example, the control unit 13 may increase the intensity of light emission when inhalation is strong, and decrease the intensity of light emission when inhalation is weak. Alternatively, for example, the control unit 13 may divide the strength of inhalation into a plurality of levels, set a predetermined color for each of the plurality of levels, and cause emission of light of the predetermined color corresponding to the strength of inhalation. The control unit 13 may be an electronic circuit module configured as a microprocessor or a microcomputer.

A communication unit 14 (notification unit) communicates with the user terminal 2 illustrated in FIG. 1 or another computer. The communication unit 14 may be implemented using at least a network interface serving as a hardware resource. The control unit 13 is capable of transmitting various kinds of information detected by the sensor 11 to the user terminal 2 or another computer via the communication unit 14. The various kinds of information transmitted from the control unit 13 to the user terminal 2 or another computer via the communication unit 14 is, for example, output information for allowing the user terminal 2 to output the content of an abnormality of the flavor inhaler 1. The output information will be described below. The communication unit 14 is capable of receiving various kinds of information transmitted from the user terminal 2 or another computer.

The flavor inhaler 1 according to an embodiment of the present invention includes a conventional tobacco product. The conventional tobacco product does not include the sensor 11, the control unit 13, or the communication unit 14, but a burning portion thereof corresponds to the change part 12. This is because a predetermined change in color or temperature is generated in the burning portion of the conventional tobacco product in response to an inhalation action of the user.

In a case where the flavor inhaler 1 is a conventional tobacco product (for example, a cigarette), a mouthpiece (for example, a mouthpiece for a cigarette) attached to one end of the tobacco product may include all or some of the functions of the sensor 11, the control unit 13, and the communication unit 14 in FIG. 2A. In this configuration, the mouthpiece is capable of transmitting various kinds of information such as inhalation information detected by the sensor 11 to the user terminal 2 or another computer.

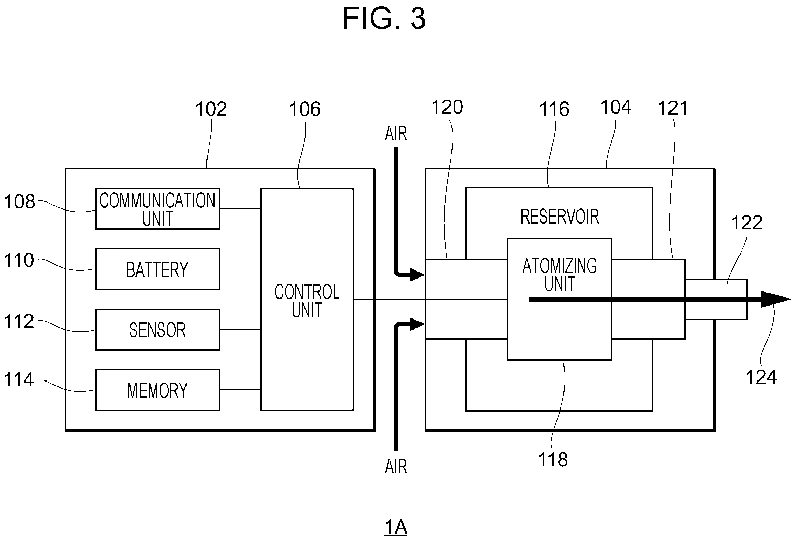

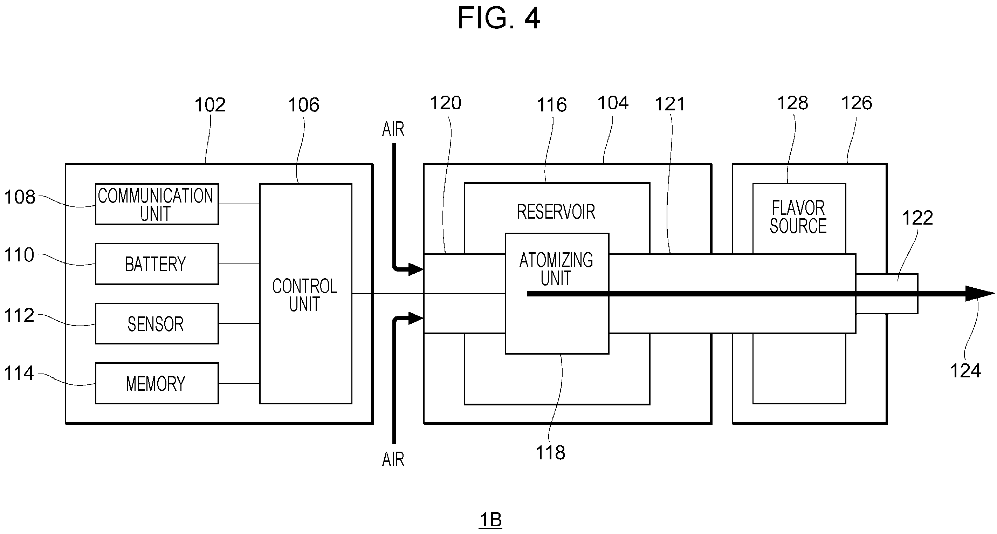

FIG. 3 is a block diagram illustrating a schematic configuration of the flavor inhaler according to the embodiment of the present invention. As illustrated in FIG. 3, a flavor inhaler 1A includes a first member 102 (battery unit) and a second member 104 (cartridge). As illustrated in the diagram, in one example, the first member 102 may include a control unit 106, a communication unit 108, a battery 110, a sensor 112, and a memory 114. The control unit 13 in FIG. 2A corresponds to the control unit 106 in FIG. 3, the sensor 11 in FIG. 2A corresponds to the sensor 112 in FIG. 3, and the communication unit 14 in FIG. 2A corresponds to the communication unit 108 in FIG. 3. In FIG. 3 and FIG. 4, the first member 102 (battery unit) is described as, but not limited to, an element included in the flavor inhaler 1A. For example, an element included in the first member 102, that is, at least one of the control unit 106, the communication unit 108, the battery 110, the sensor 112, or the memory 114, may be an element external to the flavor inhaler 1A.

In one example, the second member 104 may include a reservoir 116, an atomizing unit 118, an air intake flow path 120, an aerosol flow path 121, and an inhalation port part 122. Some of the components included in the first member 102 may be included in the second member 104. Some of the components included in the second member 104 may be included in the first member 102. The second member 104 may be configured to be removably attached to the first member 102. Alternatively, all of the components included in the first member 102 and the second member 104 may be included in the same housing instead of the first member 102 and the second member 104.

The reservoir 116 holds an aerosol source. For example, the reservoir 116 is composed of a fibrous or porous raw material and holds an aerosol source as a liquid in gaps between fibers or in pores of the porous material. As the fibrous or porous raw material described above, for example, cotton, fiberglass, or a tobacco raw material can be used. The reservoir 116 may be configured as a tank accommodating a liquid. The aerosol source is a liquid such as a polyhydric alcohol, for example, glycerin or propylene glycol, or water. In a case where the flavor inhaler 1A is a medical inhaler such as a nebulizer, the aerosol source may also include a medicine to be inhaled by a patient. In another example, the aerosol source may include a tobacco raw material or an extract derived from a tobacco raw material that releases an inhaling flavor component when heated. The reservoir 116 may have a configuration in which the aerosol source can be replenished as it is consumed. Alternatively, the reservoir 116 may be configured such that the reservoir 116 itself can be replaced when the aerosol source is consumed. The aerosol source is not limited to a liquid and may be a solid. In a case where the aerosol source is a solid, for example, the reservoir 116 may be a hollow container that is not made of a fibrous or porous raw material.

The atomizing unit 118 is configured to atomize the aerosol source to generate an aerosol. When the sensor 112 detects an inhalation action, the atomizing unit 118 generates an aerosol. For example, a wick (not illustrated) may be disposed so as to couple the reservoir 116 and the atomizing unit 118 to each other. In this case, a portion of the wick communicates with the inside of the reservoir 116 and is in contact with the aerosol source. Another portion of the wick extends to the atomizing unit 118. The aerosol source is transferred from the reservoir 116 to the atomizing unit 118 by capillary action of the wick. In one example, the atomizing unit 118 includes a heater electrically connected to the battery 110. The heater is disposed in contact with or in close proximity to the wick. When an inhalation action is detected, the control unit 106 controls the heater of the atomizing unit 118 to heat the aerosol source transferred through the wick to atomize the aerosol source. In another example, the atomizing unit 118 may be an ultrasonic atomizer that atomizes the aerosol source by ultrasonic vibration. The atomizing unit 118 is connected to the air intake flow path 120, and the air intake flow path 120 communicates with the outside of the flavor inhaler 1A. The aerosol generated in the atomizing unit 118 is mixed with air taken in through the air intake flow path 120. A fluid mixture of the aerosol and the air is delivered to the aerosol flow path 121, as indicated by an arrow 124. The aerosol flow path 121 has a tubular structure for conveying the fluid mixture of the air and the aerosol generated in the atomizing unit 118 to the inhalation port part 122.

The inhalation port part 122 is located at a terminal end of the aerosol flow path 121 and is configured to open the aerosol flow path 121 to the outside of the flavor inhaler 1A. The user holds the inhalation port part 122 in the mouth and inhales to take air containing the aerosol into the oral cavity.

The communication unit 108 (notification unit) communicates with the user terminal or another computer. The communication unit 108 may be implemented using at least a network interface serving as a hardware resource.

The battery 110 supplies electric power to the components of the flavor inhaler 1A, such as the communication unit 108, the sensor 112, the memory 114, and the atomizing unit 118. The battery 110 may be chargeable when connected to an external power supply via a predetermined port (not illustrated) of the flavor inhaler 1A. Only the battery 110 may be removable from the first member 102 or the flavor inhaler 1A and may be replaceable with a new battery 110. Alternatively, the battery 110 may be replaceable with a new battery 110 by replacing the entire first member 102 with a new first member 102.

The sensor 112 may include a pressure sensor that detects pressure fluctuations or a flow sensor that detects a flow rate in the air intake flow path 120 and/or the aerosol flow path 121. The sensor 112 may also include a weight sensor that detects the weight of a component such as the reservoir 116. The sensor 112 may also be configured to measure the number of puffs taken by the user using the flavor inhaler 1A. The sensor 112 may also be configured to add up the amount of time during which the atomizing unit 118 is energized. The sensor 112 may also be configured to detect the height of the liquid level in the reservoir 116. The sensor 112 may also be configured to detect the SOC (State of Charge), the integrated current value, the voltage, and the like of the battery 110. The integrated current value may be determined by a current integration method, an SOC-OCV (Open Circuit Voltage) method, or the like. The sensor 112 may also be an operation button or the like operable by the user.

The control unit 106 may be an electronic circuit module configured as a microprocessor or a microcomputer. The control unit 106 may be configured to control the operation of the flavor inhaler 1A in accordance with a computer-executable command stored in the memory 114. The memory 114 is a storage medium such as a ROM, a RAM, or a flash memory. The memory 114 may store the computer-executable command described above, setting data necessary for controlling the flavor inhaler 1A, and the like. For example, the memory 114 may store various data such as control methods for the communication unit 108 (such as modes of light emission, audio emission, vibration, etc.), values detected by the sensor 112, and a heating history of the atomizing unit 118. The control unit 106 reads data from the memory 114 as necessary, uses the data to control the flavor inhaler 1A, and stores the data in the memory 114 as necessary.

FIG. 4 is a block diagram illustrating another schematic configuration of the flavor inhaler according to the embodiment of the present invention. As illustrated in the diagram, a flavor inhaler 1B includes a third member 126 in addition to the elements included in the flavor inhaler 1A in FIG. 4. The third member 126 may include a flavor source 128. In one example, in a case where the flavor inhaler 1B is an electronic cigarette, the flavor source 128 may include an inhaling flavor component of tobacco. As illustrated in the diagram, the aerosol flow path 121 extends across the second member 104 and the third member 126. The inhalation port part 122 is included in the third member 126.

The flavor source 128 is a component for imparting a flavor to the aerosol. The flavor source 128 is disposed in the middle of the aerosol flow path 121. The fluid mixture of the air and the aerosol generated by the atomizing unit 118 (it should be noted that the fluid mixture may hereinafter be referred to simply as the aerosol) flows to the inhalation port part 122 through the aerosol flow path 121. In this manner, the flavor source 128 is disposed downstream of the atomizing unit 118 with respect to the flow of the aerosol. In other words, the flavor source 128 is located closer to the inhalation port part 122 in the aerosol flow path 121 than the atomizing unit 118. Accordingly, the aerosol generated by the atomizing unit 118 passes through the flavor source 128 before reaching the inhalation port part 122. As the aerosol passes through the flavor source 128, the inhaling flavor component contained in the flavor source 128 is imparted to the aerosol. In one example, in a case where the flavor inhaler 1B is a heat-not-burn tobacco product, the flavor source 128 may be one derived from tobacco, such as a shredded tobacco or a processed product obtained by forming a tobacco raw material into a granular, sheet, or powder shape. Alternatively, the flavor source 128 may be one not derived from tobacco, which is made from a non-tobacco plant (for example, mint or a herb). In one example, the flavor source 128 includes a tobacco component. The flavor source 128 may contain a flavor component such as menthol. In addition to the flavor source 128, the reservoir 116 may also have a substance containing an inhaling flavor component. For example, the flavor inhaler 1B may be configured such that the flavor source 128 holds a flavor substance derived from tobacco and the reservoir 116 includes a flavor substance not derived from tobacco.

The user holds the inhalation port part 122 in the mouth and inhales. As a result, the user can take air containing the aerosol to which the flavor has been imparted into the oral cavity.

The control unit 106 is configured to control the flavor inhalers 1A and 1B (hereinafter may be collectively referred to as the "flavor inhaler 1") according to the embodiment of the present disclosure in various ways.

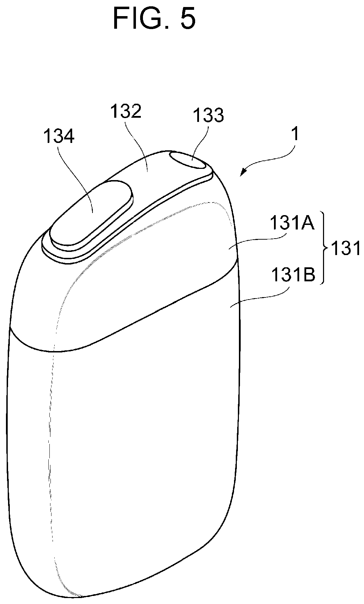

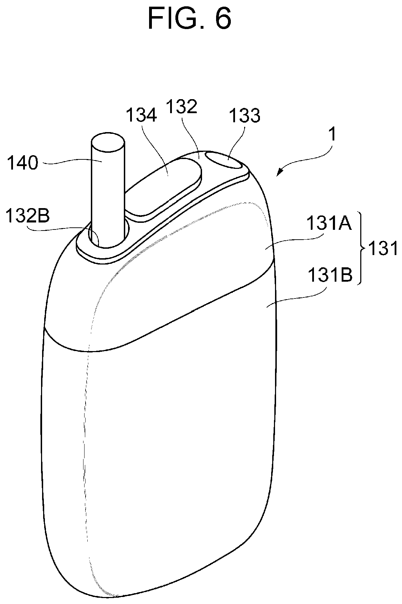

FIG. 5 is a diagram illustrating another example schematic appearance of the flavor inhaler according to the embodiment of the present invention. FIG. 6 illustrates another example schematic appearance of the flavor inhaler according to the embodiment of the present invention with an aerosol-generating substrate held. In this embodiment, for example, the flavor inhaler 1 is configured to heat an aerosol-generating substrate such as an inhalation article having a flavor-source material such as a filler that contains an aerosol source and a flavor source to generate an aerosol including a flavor. An inhalation article 140 may be used as the aerosol-generating substrate.

As will be understood by a person skilled in the art, the inhalation article 140 is merely an example of the aerosol-generating substrate. The aerosol source contained in the aerosol-generating substrate may be a solid or a liquid. The aerosol source may be a liquid such as a polyhydric alcohol, for example, glycerin or propylene glycol, or water, and a mixture thereof. The aerosol source may include a tobacco raw material or an extract derived from a tobacco raw material that releases an inhaling flavor component when heated. In a case where the flavor inhaler 1 is a medical inhaler such as a nebulizer, the aerosol source may include a medicine to be inhaled by a patient. The aerosol-generating substrate may include no flavor source in some applications.

As illustrated in FIG. 5 and FIG. 6, the flavor inhaler 1 has a top housing 131A, a bottom housing 131B, a cover 132, a switch 133, and a lid part 134. The top housing 131A and the bottom housing 131B are connected to each other to form an outermost housing 131 of the flavor inhaler 1. The housing 131 may be sized to fit in a user's hand. In this case, when the user uses the flavor inhaler 1, the user can hold the flavor inhaler 1 with their hand and inhale the aerosol.

The top housing 131A has an opening (not illustrated), and the cover 132 is coupled to the top housing 131A such that the opening is closed. As illustrated in FIG. 6, the cover 132 has an opening 132B into which the inhalation article 140 can be inserted. The lid part 134 is configured to open and close the opening 132B in the cover 132. Specifically, the lid part 134 is attached to the cover 132 and is configured to be movable along the front surface of the cover 132 between a first position at which the opening 132B is closed and a second position at which the opening 132B is opened.

The switch 133 is used to switch on and off the operation of the flavor inhaler 1. For example, as illustrated in FIG. 6, the user operates the switch 133 with the inhalation article 140 inserted into the opening 132B to supply electric power from the battery (not illustrated) to a heater unit (not illustrated). As a result, the inhalation article 140 can be heated without being burned. When the inhalation article 140 is heated, an aerosol is generated from the aerosol source included in the inhalation article 140, and the flavor of the flavor source is incorporated into the aerosol. The user inhales a portion of the inhalation article 140 (a portion illustrated in FIG. 6) protruding from the flavor inhaler 1, thereby being able to inhale the aerosol containing the flavor. In this specification, a direction in which an aerosol-generating substrate such as the inhalation article 140 is inserted into the opening 132B is referred to as a longitudinal direction of the flavor inhaler 1.

The configuration of the flavor inhaler 1 illustrated in FIG. 5 and FIG. 6 is merely an example of the configuration of a flavor inhaler according to the present disclosure. The flavor inhaler according to the present disclosure can be configured in various forms such that an aerosol can be generated by heating an aerosol-generating substrate including an aerosol source and the user can inhale the generated aerosol.

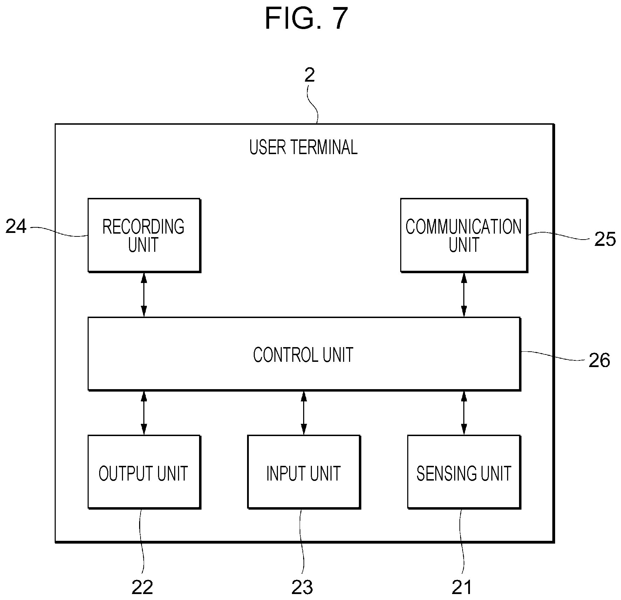

FIG. 7 is a block diagram of a schematic configuration of a user terminal according to the embodiment of the present invention. It should be noted that FIG. 7 schematically and conceptually illustrates components included in the user terminal 2 and does not illustrate the precise arrangement, shape, size, positional relationship, and the like of the components and the user terminal 2. It should also be noted that the user terminal 2 may include a component not illustrated. A non-limiting example of the user terminal 2 is a computer such as a smartphone, a tablet, or a personal computer. For example, a sensing unit 21 described below may be implemented by a digital camera externally connected to the computer.

The sensing unit 21 detects an externally observable predetermined change generated in at least a portion of the flavor inhaler 1, for example, in the change part 12. The sensing unit 21 may be implemented using at least a digital camera, a temperature sensor, or the like serving as a hardware resource.

An output unit 22 executes a message output process on the basis of output information notified from the flavor inhaler 1 illustrated in FIG. 1. The output unit 22 may execute an audio output process on the basis of output information notified from the flavor inhaler 1. The output unit 22 displays information indicating that the predetermined change described above has been detected. The output unit 22 may be implemented using at least a display (including a touch panel display, for example) or the like serving as a hardware resource.

An input unit 23 receives an input from the user. The input unit 23 may be implemented using at least a keyboard, a mouse, a touch panel display, or the like serving as a hardware resource.

A recording unit 24 stores programs, data, and the like. The recording unit 24 may be implemented using at least an HDD (Hard Disk Drive), an SSD (Solid State Drive), a memory, or the like serving as a hardware resource.

A communication unit 25 communicates with another computer. The communication unit 25 may be implemented using at least a network interface serving as a hardware resource.

A control unit 26 performs various controls. The control unit 26 may be configured to transmit and receive data via the communication unit 25. The output unit 22 is capable of outputting information based on the received output information. For example, the control unit 26 may be configured to make a determination related to the way in which the user inhales. The output unit 22 can further display a result of the determination. Further, the control unit 26 may be configured to enable the user to select one of a plurality of ways of inhaling via the input unit 23. The output unit 22 may be able to further display information based on the selected way of inhaling. The control unit 26 may be implemented using at least a processor or the like serving as a hardware resource.

Various functions of the user terminal 2 may be implemented by using an application operating on the user terminal 2. The user terminal 2 may download an application and implement various functions by using the downloaded application. Alternatively, the user terminal 2 may download a program for implementing various functions of the user terminal 2 and execute the downloaded program to implement various functions.

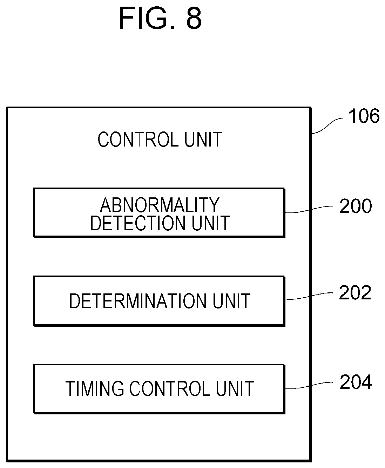

FIG. 8 is a schematic configuration diagram illustrating an example functional configuration of a control unit according to the embodiment of the present invention. As illustrated in FIG. 8, the control unit 106 functionally includes an abnormality detection unit 200, a determination unit 202, and a timing control unit 204. The control unit 106 can be implemented by, for example, a CPU or the like executing a program stored in the memory 114 illustrated FIGs. 3 and 4. Alternatively, the control unit 106 may be implemented by downloading a program to be used for processing of the control unit 106 and executing the downloaded program. The control unit 13 illustrated in FIG. 2A may functionally include the abnormality detection unit 200, the determination unit 202, and the timing control unit 204.

The abnormality detection unit 200 detects an abnormality of the flavor inhaler 1 that generates an aerosol. Detecting an abnormality includes detecting occurrence of an abnormality or detecting potential occurrence of an abnormality. Detecting occurrence of an abnormality includes, for example, detecting occurrence of an abnormality of the battery 110 when abnormal heat generation of the battery 110 occurs such that the heat generated in the battery 110 becomes greater than or equal to a set value. Detecting potential occurrence of an abnormality includes, for example, detecting potential occurrence of an abnormality of the battery 110 when the temperature of the battery 110 changes rapidly although the heat generated in the battery 110 is not greater than or equal to a set value.

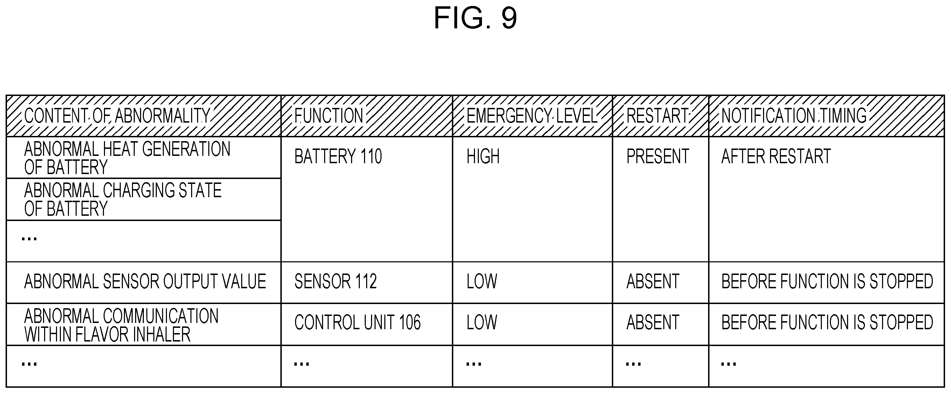

FIG. 9 is a diagram illustrating an example of an information table storing notification timing information indicating a timing of notifying the user terminal 2 of output information according to the embodiment of the present invention. As illustrated in FIG. 9, the "notification timing" information is recorded in the memory 114 illustrated in FIGs. 3 and 4 in association with, for example, "content of abnormality" information, "function" information, "emergency level" information, and information indicating the presence or absence of "restart".

The "content of abnormality" refers to a type of abnormality of the flavor inhaler 1. As illustrated in FIG. 9, the "content of abnormality" includes, for example, abnormal heat generation of the battery 110 such that the heat generated in the battery 110 is greater than or equal to a set value, an abnormal charging state of the battery 110, abnormal heat generation of the heater of the atomizing unit 118 such that the heat generated in the heater is greater than or equal to a set value, or the like. As illustrated in FIG. 9, one or more abnormalities may occur in one function.

The determination unit 202 illustrated in FIG. 8 determines, based on the content of an abnormality of the flavor inhaler 1, whether to stop at least one function of the flavor inhaler 1 corresponding to the content of the abnormality. The "function" refers to a function of the flavor inhaler 1. As illustrated in FIG. 9, the "function" may include, for example, an element such as the battery 110 or the heater of the atomizing unit 118. Further, the "function" may include a function implemented by each element, such as a function of supplying electric power of the battery 110 or a heating function of the heater of the atomizing unit 118.

For example, when an abnormality occurs in an output value of the sensor 112, the determination unit 202 determines to stop the function of the sensor 112 by referring to the information table illustrated in FIG. 9. For example, the determination unit 202 generates a control signal for stopping functionality and transmits the control signal to the sensor 112 to stop each function.

The determination unit 202 may determine, based on the content of an abnormality of the flavor inhaler 1, the emergency level for stopping at least one function of the flavor inhaler 1. The "emergency level" refers to a level of emergency for stopping a function of the flavor inhaler 1. The "emergency level" is indicated by, for example, "high", "medium", or "low" in descending order of the level of emergency. Specifically, "high" is set for a case where it is highly likely to adversely affect the entire flavor inhaler 1 and an urgent stop of a function is required, such as abnormalities of the battery 110. The functions having a high emergency level may include elements (functions) other than the battery 110. Further, "low" is set for abnormalities that require relatively less urgency to stop functions than the abnormalities of the battery 110, such as abnormalities of the sensor 112. The emergency level is not limited to being set to the three levels described above, and may be set to two levels of "high" and "low" or may be set to four or more levels.

When at least one function of the flavor inhaler 1 is to be stopped, the timing control unit 204 illustrated in FIG. 8 controls, based on the content of an abnormality of the flavor inhaler 1, the timing of notifying the user terminal 2 of output information for allowing the user terminal 2 to output the content of the abnormality. The "notification timing" refers to a timing of notifying the output information to the user terminal 2. For example, the "notification timing" includes at least one timing of (1) notifying the output information to the user terminal 2 "before a specific function is stopped", (2) notifying the output information to the user terminal 2 "after a specific function is stopped and before the function is resumed", or (3) notifying the output information to the user terminal 2 "after a specific function is stopped and after the function is resumed".

For example, the timing control unit 204 controls the timing such that output information for allowing the user terminal 2 to output the content of the abnormality is notified to the user terminal 2 at least either before or after the function is stopped, based on the emergency level determined by the determination unit 202. Specifically, when an abnormality having a high "emergency level" for stopping a function, such as an abnormality of the battery 110, occurs, the function of the battery 110 needs to be immediately stopped. Accordingly, the timing control unit 204 controls the notification timing such that the output information is not notified to the user terminal 2 before the function of the battery 110 is stopped and the output information is notified to the user terminal 2 "after the function of the battery 110 is stopped and after the function is restarted". The stop of the function of the battery 110 includes, for example, a complete stop of power supply to the flavor inhaler 1, that is, a shutdown. The shutdown may include at least temporarily stopping all of the functions of the flavor inhaler 1. The resumption of the function of the battery 110 includes, for example, a supply of electric power to the battery 110, that is, a restart of the flavor inhaler 1. The restart of the flavor inhaler 1 may be automatically executed based on information indicating the presence or absence of "restart" illustrated in FIG. 9. The restart of the flavor inhaler 1 may be executed in response to an operation of the user, for example, in response to the user pressing a power button or the like (not illustrated) on the flavor inhaler 1.

When an abnormality having a high "emergency level" for stopping a function occurs in an element (function) other than the battery 110, the function needs to be immediately stopped. However, since the function of the battery 110 is not stopped, the notification process of the output information is executable. Accordingly, the timing control unit 204 can control the notification timing such that the output information is notified to the user terminal 2 "after the function in which the abnormality has occurred is stopped and before the function is resumed". The timing control unit 204 may control the notification timing such that the output information is notified to the user terminal 2 "after the function in which the abnormality has occurred is stopped and after the function is resumed".

With these configurations, when an abnormality having a high "emergency level" for stopping a function occurs, the function can be immediately stopped, and the output information can be notified to the user terminal 2 at an optimal timing after the function is resumed or before the function is resumed.

In contrast, when an abnormality having a relatively low "emergency level" for stopping a function occurs, it is not highly necessary to immediately stop the function. Accordingly, the function is stopped after the output information is notified to the user terminal 2. For example, in response to occurrence of an abnormality in the sensor 112, the timing control unit 204 controls the notification timing such that output information for allowing the user terminal 2 to output the content of the abnormality of the sensor 112 is notified to the user terminal 2 before the function of the sensor 112 is stopped. Unlike the stop of the function of the battery 110, the stop of the function of the heater or the sensor 112 includes, for example, a stop of each function of the heater or the sensor 112. Depending on the conditions of occurrence of an abnormality, the state of the flavor inhaler 1 may be shifted to a sleep (pause) state in which electric power is supplied only to a predetermined memory that stores a program in use, a data file, and the like.

With this configuration, when an abnormality having a relatively low "emergency level" for stopping a function occurs, the function is stopped after the output information is notified to the user terminal 2. Therefore, even in such a case, the output information can be notified to the user terminal 2 at an optimum timing before the function is stopped.

The notification of the output information to the user terminal 2 "before a specific function is stopped" may include a notification of the output information to the user terminal 2 "during execution of a process of stopping" the specific function or "before execution of a process of stopping" the specific function. The notification of the output information to the user terminal 2 "after a specific function is stopped and before the function is resumed" may include a notification of the output information to the user terminal 2 "during execution of a process of resuming the specific function after stopping the function" or "before execution of a process of resuming the specific function after stopping the function". The notification of the output information to the user terminal 2 "after a specific function is stopped and after the function is resumed" may include a notification of the output information to the user terminal 2 "during execution of a process of resuming the specific function after stopping the function" or "after execution of a process of resuming the specific function after stopping the function".

### [Abnormality Notification Process]

### <First Embodiment>

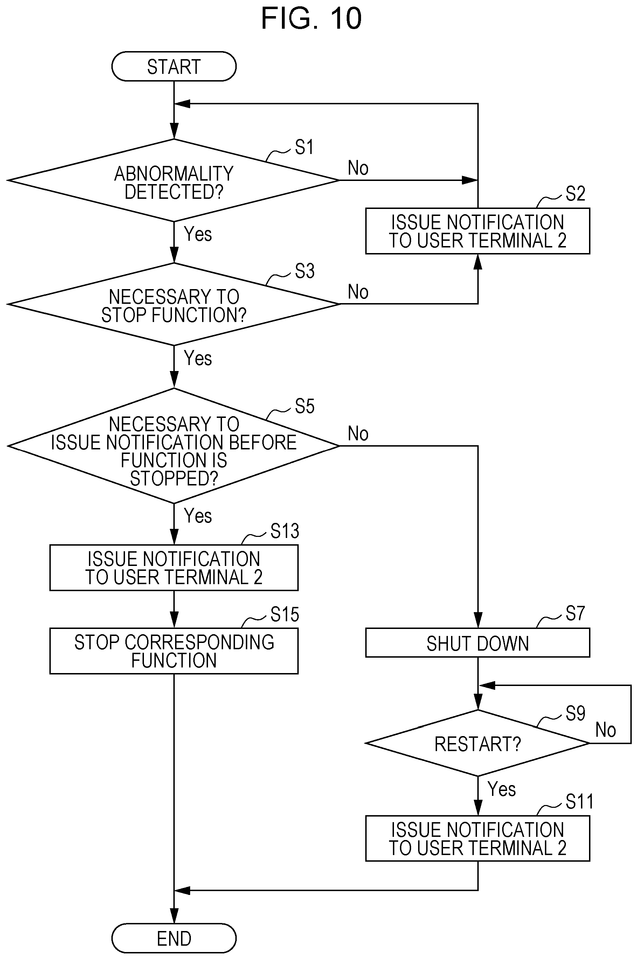

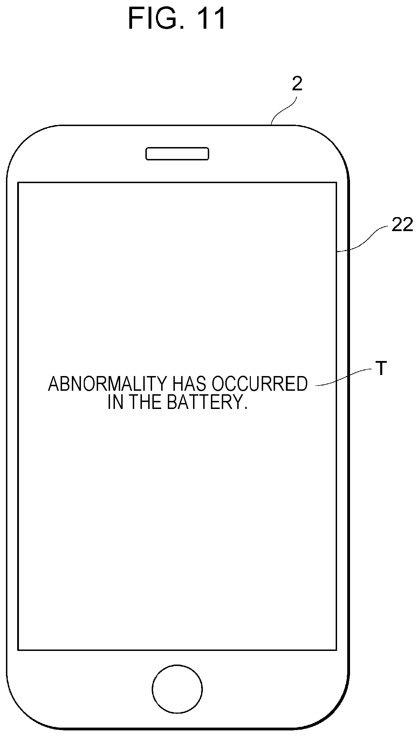

An example of an abnormality notification process according to a first embodiment of the present invention will be described with reference to FIG. 10 and FIG. 11. The abnormality notification process according to the first embodiment is an abnormality notification process including a process of shutting down a flavor inhaler. FIG. 10 is a flowchart illustrating an example of an abnormality notification process according to an embodiment of the present invention. As illustrated in FIG. 10, if the abnormality detection unit 200 illustrated in FIG. 8 detects an abnormality of a flavor inhaler (aerosol generation device) that generates an aerosol (in the case of Yes) in step S1, the process proceeds to step S3. If the abnormality detection unit 200 does not detect an abnormality of the flavor inhaler that generates an aerosol (in the case of No), the process waits until an abnormality is detected. In step S3, the determination unit 202 illustrated in FIG. 8 determines, based on the content of the abnormality of the flavor inhaler, whether to stop at least one function of the flavor inhaler corresponding to the content of the abnormality. If the function is to be stopped (in the case of Yes), the process proceeds to step S5. On the other hand, for example, if the content of the abnormality is minor, the determination unit 202 may determine that the function is not to be stopped. In this case, in step S2, the user terminal 2 is notified of occurrence of an abnormality and the content thereof, and then the process returns to step S1.

For example, the timing control unit 204 illustrated in FIG. 8 controls, based on the emergency level determined by the determination unit 202, the notification timing such that output information for allowing the user terminal 2 to output the content of the abnormality is notified to the user terminal 2 at least either before the function is stopped or when the function is resumed after the function is stopped (step S5). For example, when an abnormality having a high "emergency level" for stopping a function, such as an abnormality of the battery 110, occurs, the function of the battery 110 needs to be immediately stopped (No in step S5). Then, the process proceeds to step S7. The determination unit 202 executes shutdown (step S7). If the function of the battery 110 is resumed (restarted) (in the case of Yes) in step S9, the timing control unit 204 controls the notification timing so as to notify the user terminal 2 of the output information (step S11).

When the user terminal 2 receives output information for allowing the user terminal to output the content of an abnormality of the flavor inhaler from, for example, the communication unit 14 illustrated in FIG. 2A or the communication unit 108 illustrated in FIG. 3 or 4, the user terminal 2 outputs the content of the abnormality on the basis of the received output information.

FIG. 11 is a diagram illustrating an example of a screen output from an output unit of the user terminal according to the embodiment of the present invention. As illustrated in FIG. 11, text information T indicating the content of an abnormality of the flavor inhaler, for example, "Abnormality has occurred in the battery", is displayed on the screen of the output unit 22 of the user terminal 2. The user terminal 2 may output the content of the abnormality of the flavor inhaler to the user by audio information, video information, image information, or the like, instead of the text information T or together with the text information T. The means or method by which the user terminal 2 outputs the content of the abnormality is not limited to these examples, and any means or method that enables the user to easily recognize the content of the abnormality may be used to output the content of the abnormality.

This configuration enables the user terminal 2 to notify the user of the content of an abnormality of the flavor inhaler in a more easily visually recognized manner.

On the other hand, if an abnormality having a relatively low "emergency level" for stopping a function (for example, an abnormal sensor output value illustrated in FIG. 9) occurs, it is not highly necessary to immediately stop the sensor 112 function (Yes in step S5). Then, the process proceeds to step S13. First, in step S13, the timing control unit 204 notifies the user terminal 2 of output information for allowing the user terminal 2 to output the content of the abnormality of the sensor 112. Upon receipt of the output information from the communication unit 14 illustrated in FIG. 2A or the communication unit 108 illustrated in FIG. 3 or 4, the user terminal 2 outputs the content of the abnormality on the basis of the received output information. Then, the function of the sensor 112 is stopped (step S15). Even when an abnormality having a relatively low "emergency level" for stopping a function occurs, the user terminal 2 may be notified of the abnormality after the function is stopped.

As described above, according to the first embodiment of the present invention, the flavor inhaler determines, based on the content of an abnormality, whether to stop at least one function of the flavor inhaler corresponding to the content of the abnormality. When the at least one function is to be stopped, the flavor inhaler notifies the user terminal of output information for allowing the user terminal to output the content of the abnormality, based on the content of the abnormality. The flavor inhaler controls, based on the content of the abnormality, the timing of notifying the user terminal of the output information. Therefore, it is possible to accurately identify the content of an abnormality of the flavor inhaler without requiring labor.

When an abnormality having a high "emergency level" for stopping a function occurs in the battery 110, the flavor inhaler can immediately shut down the battery 110 and notify the user terminal of the output information at an optimal timing after the battery 110 is restarted. When an abnormality having a relatively low "emergency level" for stopping a function occurs, the flavor inhaler can notify the user terminal of the output information at an optimum timing before the function is stopped.

### <Second Embodiment>

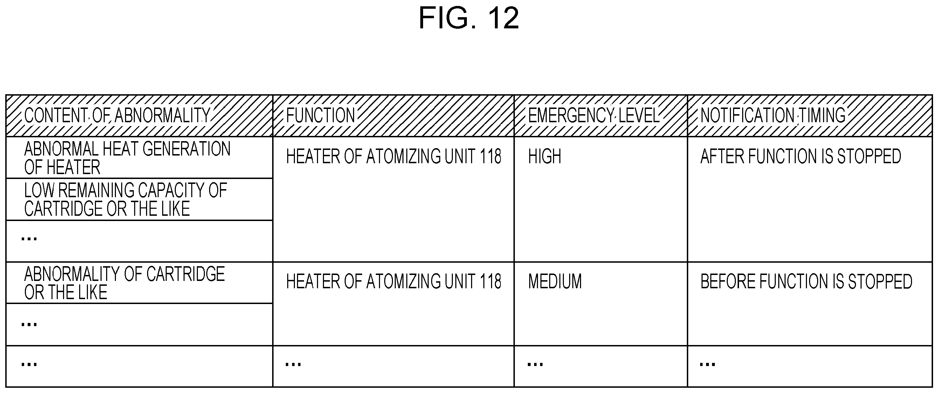

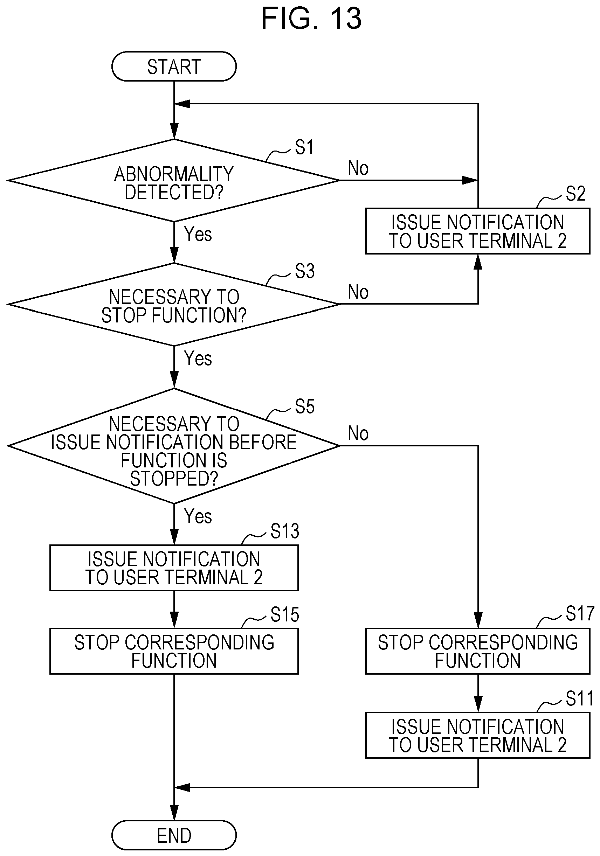

An example of an abnormality notification process according to a second embodiment of the present invention will be described with reference to FIG. 12 and FIG. 13. The abnormality notification process according to the second embodiment does not include a process of shutting down a flavor inhaler, unlike the abnormality notification process according to the first embodiment. Hereinafter, differences from the abnormality notification process according to the first embodiment will be described in particular. FIG. 12 is a diagram illustrating another example of the notification timing information according to the embodiment of the present invention. FIG. 13 is a flowchart illustrating an example of the abnormality notification process according to the second embodiment of the present invention.

For example, when an abnormality having a high "emergency level" for stopping a function (for example, abnormal heat generation of the heater illustrated in FIG. 12) occurs in an element (function) other than the battery 110 (No in step S5), the process proceeds to step S17, and the determination unit 202 immediately stops the function of the heater. For example, the determination unit 202 stops power supply to the heater to stop the function of the heater.

Here, since the function of the battery 110 is not stopped, the notification process of the output information is executable. Accordingly, in step S11, the timing control unit 204 can control the notification timing such that the output information is notified to the user terminal 2 "after the function in which the abnormality has occurred is stopped and before the function is resumed". Alternatively, the timing control unit 204 can control the notification timing such that the output information is notified to the user terminal 2 "after the function in which the abnormality has occurred is stopped and after the function is resumed". As illustrated in FIG. 12, the control of the abnormality notification timing described above may be executed based on a preset notification timing, or the notification timing may be controlled in accordance with an instruction from the user after the corresponding function is stopped.

On the other hand, when an abnormality having not so high "emergency level" (for example, an abnormality whose "emergency level" is "medium") occurs (Yes in step S5), that is, as illustrated in FIG. 12, when an abnormality of a cartridge or the like (for example, sensing of an imitation of the cartridge or the like) occurs, the timing control unit 204 notifies the user terminal 2 of the abnormality before the function is stopped (step S13). Even when an abnormality having a relatively low "emergency level" for stopping a function occurs, the user terminal 2 may be notified of the abnormality after the function is stopped.

The "notification timing" set for a specific "function" need not be single, and a plurality of different "notification timings" may be set in accordance with the "content of abnormalities" of the specific "function" Specifically, even for an abnormality that has occurred in the same function (for example, the heater of the atomizing unit 118 illustrated in FIG. 12), a different notification timing can be set according to the emergency level.

According to the second embodiment of the present invention, as in the first embodiment, the flavor inhaler can accurately identify the content of an abnormality of the flavor inhaler without requiring labor.

When an abnormality having a high "emergency level" for stopping a function occurs in an element (function) other than the battery 110, the flavor inhaler can immediately stop the function and notify the user terminal of the output information at an optimal timing after the function is resumed (or before the function is resumed). When an abnormality having a relatively low "emergency level" for stopping a function occurs, the flavor inhaler can notify the user terminal of the output information at an optimum timing before the function is stopped.

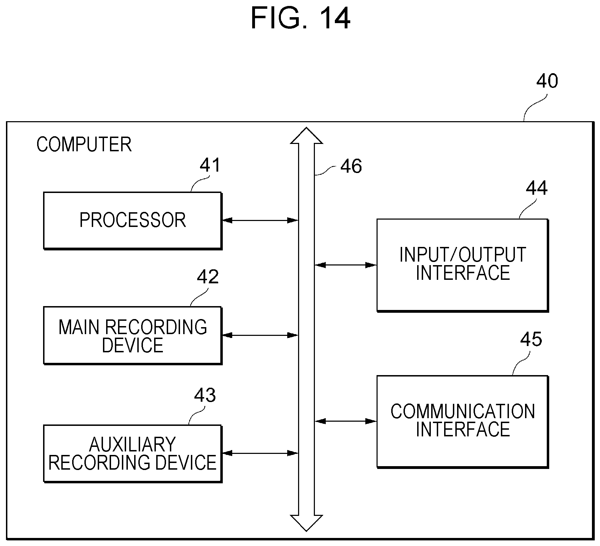

FIG. 14 is a diagram illustrating an example hardware configuration of a computer according to an embodiment of the present invention. An example hardware configuration of a computer that can be used to configure the user terminal 2 illustrated in FIG. 1 will be described with reference to FIG. 14.

As illustrated in FIG. 14, a computer 40 mainly includes, as hardware resources, a processor 41, a main recording device 42, an auxiliary recording device 43, an input/output interface 44, and a communication interface 45, and these are connected to each other via a bus line 46 including an address bus, a data bus, a control bus, and the like. An interface circuit (not illustrated) may be interposed, as necessary, between the bus line 46 and each hardware resource.

The processor 41 controls the entire computer. The main recording device 42 provides a work area for the processor 41 and is a volatile memory such as an SRAM (Static Random Access Memory) or a DRAM (Dynamic Random Access Memory). The auxiliary recording device 43 is a non-volatile memory such as an HDD, an SSD, or a flash memory that stores a program, data, and the like that are software. The program, the data, and the like are loaded from the auxiliary recording device 43 to the main recording device 42 via the bus line 46 at any point in time.

The input/output interface 44 performs one or both of presenting information and receiving input of information, and is a digital camera, a keyboard, a mouse, a display, a touch panel display, a microphone, a speaker, a temperature sensor, or the like.

It will be apparent to a person skilled in the art that the computer 40 can function as desired means, execute desired steps, and implement desired functionality through cooperation of the hardware resources exemplified above and software.

The embodiments described above are intended to facilitate understanding of the present invention and is not to be construed as limiting the present invention. The present invention may be modified/improved without departing from the gist thereof, and the present invention also includes equivalents thereof.

### Reference Signs List

- 1, 1A, 1B: flavor inhaler
- 2: user terminal
- 11: sensor
- 12: change part
- 13: control unit
- 14: communication unit
- 21: sensing unit
- 22: output unit
- 23: input unit
- 24: recording unit
- 25: communication unit
- 26: control unit
- 100: abnormality notification processing system
- 102: first member
- 104: second member
- 106: control unit
- 108: communication unit
- 110: battery
- 112: sensor
- 114: memory
- 116: reservoir
- 118: atomizing unit
- 120: air intake flow path
- 121: aerosol flow path
- 122: inhalation port part
- 126: third member
- 128: flavor source
- 131: housing
- 131A: top housing
- 131B: bottom housing
- 132: cover
- 132B: opening
- 133: switch
- 134: lid part
- 140: inhalation article
- 161, 162: end
- 200: abnormality detection unit
- 202: determination unit
- 204: timing control unit

## Claims

1. A battery unit (102) in an aerosol generation device (1) for generating an aerosol, the battery unit (102) comprising:
an abnormality detection unit (200) configured to detect an abnormality of the aerosol generation device (1);
a determination unit (202) configured to determine, based on content of the abnormality, whether to stop at least one function of the aerosol generation device (1) corresponding to the content of the abnormality;
a notification unit (14) configured to notify a user terminal (2) of output information for allowing the user terminal (2) to output the content of the abnormality, based on the content of the abnormality, when the at least one function is to be stopped; and
a timing control unit (204) configured to control a timing of notifying the user terminal (2) of the output information at the user terminal (2), based on the content of the abnormality.

2. The battery unit (102) according to claim 1, wherein
the determination unit (202) is configured to determine an emergency level for stopping the at least one function, based on the content of the abnormality, and
the timing control unit (204) is configured to control the timing, based on the emergency level, such that the user terminal (2) is notified of the output information at the user terminal (2) at least either before the function is stopped or after the function is stopped.

3. The battery unit according to claim 1 or 2, wherein
the battery unit (102) is configured to be removably attached to a cartridge (104) including an atomizing unit (118) configured to heat a heater to atomize an aerosol source, and
the timing control unit (204) is configured to control, in response to occurrence of an abnormality in the heater, the timing such that output information for allowing the user terminal (2) to output content of the abnormality of the heater is notified to the user terminal (2) before a function of the heater is stopped or after the function of the heater is stopped.

4. The battery unit (102) according to any one of claims 1 to 3, further comprising
a sensor (112) configured to detect information regarding inhalation of a user, wherein
the timing control unit (204) is configured to control, in response to occurrence of an abnormality in the sensor (112), the timing such that output information for allowing the user terminal (2) to output content of the abnormality of the sensor (112) is notified to the user terminal (2) before a function of the sensor (112) is stopped.

5. The battery unit (102) according to claim 1 or 2, further comprising
a battery (110) configured to supply electric power to the aerosol generation device (1), wherein
the timing control unit (204) is configured to control, in response to occurrence of an abnormality in the battery (110), the timing such that output information for allowing the user terminal (2) to output content of the abnormality of the battery (110) is notified to the user terminal (2) after a function of the battery (110) is stopped and after the function is resumed.

6. An information processing method executed by an aerosol generation device (1) for generating an aerosol, the information processing method comprising:
a step of detecting an abnormality of the aerosol generation device (1);
a step of determining, based on content of the abnormality, whether to stop at least one function of the aerosol generation device (1) corresponding to the content of the abnormality;
a step of notifying a user terminal (2) of output information for allowing the user terminal (2) to output the content of the abnormality, based on the content of the abnormality, when the at least one function is to be stopped; and
a step of controlling a timing of notifying the user terminal (2) of the output information at the user terminal (2), based on the content of the abnormality.

7. A program for causing a computer to function as:
an abnormality detection unit (200) configured to detect an abnormality of an aerosol generation device (1) configured to generate an aerosol;
a determination unit (202) configured to determine, based on content of the abnormality, whether to stop at least one function of the aerosol generation device (1) corresponding to the content of the abnormality;
a notification unit (14) configured to notify a user terminal (2) of output information for allowing the user terminal (2) to output the content of the abnormality, based on the content of the abnormality, when the at least one function is to be stopped; and
a timing control unit (204) configured to control a timing of notifying the user terminal (2) of the output information at the user terminal (2), based on the content of the abnormality.

## Patentansprüche

1. Batterieeinheit (102) in einer Aerosolerzeugungsvorrichtung (1) zum Erzeugen eines Aerosols, wobei die Batterieeinheit (102) Folgendes umfasst:
eine Anomalieerkennungseinheit (200), die dazu ausgebildet ist, eine Anomalie der Aerosolerzeugungsvorrichtung (1) zu erkennen;
eine Bestimmungseinheit (202), die so ausgebildet ist, dass sie auf der Grundlage eines Inhalts der Anomalie bestimmt, ob mindestens eine Funktion der Aerosolerzeugungsvorrichtung (1) entsprechend dem Inhalt der Anomalie beendet werden soll;
eine Benachrichtigungseinheit (14), die so ausgebildet ist, dass sie ein Benutzerendgerät (2) über Ausgabeinformationen benachrichtigt, damit das Benutzerendgerät (2) den Inhalt der Anomalie auf der Grundlage des Inhalts der Anomalie ausgeben kann, wenn die mindestens eine Funktion beendet werden soll; und
eine Zeitsteuereinheit (204), die so ausgebildet ist, dass sie einen Zeitpunkt einer Benachrichtigung des Benutzerendgeräts (2) über die Ausgabeinformationen am Benutzerendgerät (2) auf der Grundlage des Inhalts der Anomalie steuert.

2. Die Batterieeinheit (102) nach Anspruch 1, wobei
die Bestimmungseinheit (202) so ausgebildet ist, dass sie auf der Grundlage des Inhalts der Anomalie eine Dringlichkeitsstufe zum Beenden der mindestens einen Funktion bestimmt, und
die Zeitsteuereinheit (204) so ausgebildet ist, dass sie den Zeitpunkt auf der Grundlage der Dringlichkeitsstufe so steuert, dass das Benutzerendgerät (2) über die Ausgabeinformationen am Benutzerendgerät (2) zumindest entweder vor einem Beenden der Funktion oder nach einem Beenden der Funktion benachrichtigt wird.

3. Batterieeinheit nach Anspruch 1 oder 2, wobei
die Batterieeinheit (102) so ausgebildet ist, dass sie abnehmbar an einer Kartusche (104) befestigt wird, die eine Zerstäubungseinheit (118) einschließt, welche dazu ausgebildet ist, ein Heizelement zu erwärmen, um eine Aerosolquelle zu zerstäuben, und
die Zeitsteuereinheit (204) so ausgebildet ist, dass sie als Reaktion auf ein Auftreten einer Anomalie im Heizelement den Zeitpunkt so steuert, dass Ausgabeinformationen, die es dem Benutzerendgerät (2) ermöglichen, einen Inhalt der Anomalie des Heizelements auszugeben, an das Benutzerendgerät (2) entweder vor einem Beenden einer Funktion des Heizelements oder nach einem Beenden einer Funktion des Heizelements benachrichtigt werden.

4. Batterieeinheit (102) nach einem der Ansprüche 1 bis 3, weiter umfassend
einen Sensor (112), der dazu ausgebildet ist, Informationen über eine Inhalation eines Benutzers zu erfassen, wobei
die Zeitsteuereinheit (204) so ausgebildet ist, dass sie als Reaktion auf ein Auftreten einer Anomalie im Sensor (112) den Zeitpunkt so steuert, dass Ausgabeinformationen, die es dem Benutzerendgerät (2) ermöglichen, einen Inhalt der Anomalie des Sensors (112) auszugeben, an das Benutzerendgerät (2) vor einem Beenden einer Funktion des Sensors (112) benachrichtigt werden.

5. Batterieeinheit (102) nach Anspruch 1 oder 2, weiter umfassend
eine Batterie (110), die dazu ausgebildet ist, die Aerosolerzeugungsvorrichtung (1) mit elektrischer Energie zu versorgen, wobei
die Zeitsteuereinheit (204) so ausgebildet ist, dass sie als Reaktion auf ein Auftreten einer Anomalie in der Batterie (110) den Zeitpunkt so steuert, dass Ausgabeinformationen, die es dem Benutzerendgerät (2) ermöglichen, einen Inhalt der Anomalie der Batterie (110) auszugeben, an das Benutzerendgerät (2) benachrichtigt werden, nachdem eine Funktion der Batterie (110) beendet wird und nachdem die Funktion wieder aufgenommen wurde.

6. Informationsverarbeitungsverfahren, das von einer Aerosolerzeugungsvorrichtung (1) zum Erzeugen eines Aerosols ausgeführt wird, wobei das Informationsverarbeitungsverfahren Folgendes umfasst:
einen Schritt zum Erkennen einer Anomalie der Aerosolerzeugungsvorrichtung (1);
auf der Grundlage des Inhalts der Anomalie einen Schritt zum Bestimmen, ob mindestens eine Funktion der Aerosolerzeugungsvorrichtung (1) entsprechend dem Inhalt der Anomalie beendet werden soll;
einen Schritt zum Benachrichtigen eines Benutzerendgeräts (2) über Ausgabeinformationen, damit das Benutzerendgerät (2) den Inhalt der Anomalie auf der Grundlage des Inhalts der Anomalie ausgeben kann, wenn die mindestens eine Funktion beendet werden soll; und
einen Schritt zum Steuern eines Zeitpunkts einer Benachrichtigung des Benutzerendgeräts (2) über die Ausgabeinformationen am Benutzerendgerät (2) auf der Grundlage des Inhalts der Anomalie.

7. Programm zum Veranlassen eines Computers als Folgendes zu funktionieren:
eine Anomalieerkennungseinheit (200), die dazu ausgebildet ist, eine Anomalie einer Aerosolerzeugungsvorrichtung (1) zu erkennen, die dazu ausgebildet ist, ein Aerosol zu erzeugen;
eine Bestimmungseinheit (202), die so ausgebildet ist, dass sie auf der Grundlage eines Inhalts der Anomalie bestimmt, ob mindestens eine Funktion der Aerosolerzeugungsvorrichtung (1) entsprechend dem Inhalt der Anomalie beendet werden soll;
eine Benachrichtigungseinheit (14), die so ausgebildet ist, dass sie ein Benutzerendgerät (2) über Ausgabeinformationen benachrichtigt, damit das Benutzerendgerät (2) den Inhalt der Anomalie auf der Grundlage des Inhalts der Anomalie ausgeben kann, wenn die mindestens eine Funktion beendet werden soll; und
eine Zeitsteuereinheit (204), die so ausgebildet ist, dass sie einen Zeitpunkt einer Benachrichtigung des Benutzerendgeräts (2) über die Ausgabeinformationen am Benutzerendgerät (2) auf der Grundlage des Inhalts der Anomalie steuert.

## Revendications

1. Unité (102) de batterie dans un dispositif (1) de génération d'aérosol pour générer un aérosol, l'unité (102) de batterie comprenant :
une unité (200) de détection d'anomalie configurée pour détecter une anomalie du dispositif (1) de génération d'aérosol ;
une unité de détermination (202) configurée pour déterminer, sur la base du contenu de l'anomalie, s'il faut arrêter au moins une fonction du dispositif (1) de génération d'aérosol qui correspond au contenu de l'anomalie ;
une unité de notification (14) configurée pour notifier à un terminal utilisateur (2) des informations de sortie permettant au terminal utilisateur (2) de délivrer en sortie le contenu de l'anomalie, sur la base du contenu de l'anomalie, lorsque l'au moins une fonction doit être arrêtée ; et
une unité (204) de commande de synchronisation configurée pour commander une synchronisation de notification au terminal utilisateur (2) des informations de sortie au terminal utilisateur (2), sur la base du contenu de l'anomalie.

2. Unité (102) de batterie selon la revendication 1, dans laquelle
l'unité de détermination (202) est configurée pour déterminer un niveau d'urgence pour arrêter l'au moins une fonction, sur la base du contenu de l'anomalie, et
l'unité (204) de commande de synchronisation est configurée pour commander la synchronisation, sur la base du niveau d'urgence, de sorte que le terminal utilisateur (2) soit notifié des informations de sortie au niveau du terminal utilisateur (2) au moins soit avant l'arrêt de la fonction, soit après l'arrêt de la fonction.

3. Unité de batterie selon la revendication 1 ou la revendication 2, dans laquelle
l'unité (102) de batterie est configurée pour être fixée de manière amovible à une cartouche (104) incluant une unité d'atomisation (118) configurée pour chauffer un dispositif de chauffage destiné à atomiser une source d'aérosol, et
l'unité (204) de commande de synchronisation est configurée pour commander, en réponse à l'apparition d'une anomalie dans le dispositif de chauffage, la synchronisation de sorte que des informations de sortie permettant au terminal utilisateur (2) de délivrer en sortie le contenu de l'anomalie du dispositif de chauffage soient notifiées au terminal utilisateur (2) avant l'arrêt d'une fonction du dispositif de chauffage ou après l'arrêt de la fonction du dispositif de chauffage.

4. Unité (102) de batterie selon l'une quelconque des revendications 1 à 3, comprenant en outre
un capteur (112) configuré pour détecter des informations concernant l'inhalation d'un utilisateur, dans laquelle
l'unité (204) de commande de synchronisation est configurée pour commander, en réponse à l'apparition d'une anomalie dans le capteur (112), la synchronisation de sorte que des informations de sortie permettant au terminal utilisateur (2) de délivrer en sortie le contenu de l'anomalie du capteur (112) soient notifiées au terminal utilisateur (2) avant l'arrêt d'une fonction du capteur (112).

5. Unité (102) de batterie selon la revendication 1 ou la revendication 2, comprenant en outre
une batterie (110) configurée pour fournir une alimentation électrique au dispositif (1) de génération d'aérosol, dans laquelle
l'unité (204) de commande de synchronisation est configurée pour commander, en réponse à l'apparition d'une anomalie dans la batterie (110), la synchronisation de sorte que des informations de sortie permettant au terminal utilisateur (2) de délivrer en sortie le contenu de l'anomalie de la batterie (110) soient notifiées au terminal utilisateur (2) après l'arrêt d'une fonction de la batterie (110) et après la reprise de la fonction.

6. Procédé de traitement d'informations mis en œuvre par un dispositif (1) de génération d'aérosol pour générer un aérosol, le procédé de traitement d'informations comprenant :
une étape consistant à détecter une anomalie du dispositif (1) de génération d'aérosol ;
une étape consistant à déterminer, sur la base du contenu de l'anomalie, s'il faut arrêter ou non l'au moins une fonction du dispositif (1) de génération d'aérosol qui correspond au contenu de l'anomalie ;
une étape consistant à notifier à un terminal utilisateur (2) des informations de sortie permettant au terminal utilisateur (2) de délivrer en sortie le contenu de l'anomalie, sur la base du contenu de l'anomalie, lorsque l'au moins une fonction doit être arrêtée ; et
une étape consistant à commander une synchronisation de notification au terminal utilisateur (2) des informations de sortie au terminal utilisateur (2), sur la base du contenu de l'anomalie.

7. Programme permettant d'amener un ordinateur à fonctionner comme :
une unité (200) de détection d'anomalie configurée pour détecter une anomalie d'un dispositif (1) de génération d'aérosol configuré pour générer un aérosol ;
une unité de détermination (202) configurée pour déterminer, sur la base du contenu de l'anomalie, s'il faut arrêter au moins une fonction du dispositif (1) de génération d'aérosol qui correspond au contenu de l'anomalie ;
une unité de notification (14) configurée pour notifier à un terminal utilisateur (2) des informations de sortie permettant au terminal utilisateur (2) de délivrer en sortie le contenu de l'anomalie, sur la base du contenu de l'anomalie, lorsque l'au moins une fonction doit être arrêtée ; et
une unité (204) de commande de synchronisation configurée pour commander une synchronisation de notification au terminal utilisateur (2) des informations de sortie au terminal utilisateur (2), sur la base du contenu de l'anomalie.
